# EUROPEAN PATENT APPLICATION

(11) **EP 1 964 723 A2**
(43) Date of publication of application: **03.09.2008**
(21) Application number: 08003462.2
(22) Date of filing: 26.02.2008
(51) Int. Cl.: B60R 11/02

(54) **Suction plate and cradle for an automobile**

(30) Priority: 28.02.2007 KR 20070020426; 02.05.2007 KR 20070042790
(71) Applicant: LG Electronics Inc., Seoul, 150-721 (KR)
(72) Inventor: Kim, Jung-Sik, Suwon-City Gyeonggi-do 443-707 (KR)
(74) Representative: Vossius & Partner

(57) **Abstract**

The present invention relates to a suction plate and a cradle for an automobile having the same. A suction plate according to the present invention comprises a housing 12 provided with a boss 14 protruding in one direction, the boss 14 having a through hole 16 formed to pass through a side thereof; a suction member 22 installed at a lower portion of the housing 12 to be moved relative to the housing 12, the suction member having a central shaft 26 inserted in the boss 14, the central shaft 26 having a central hole 28 formed thereon to pass through a side thereof; an elastic member 31 provided in an upper portion of the central shaft 26 to provide elastic force in a direction in which the suction member 22 and the housing 12 go away from each other; and an operating lever 32 provided in the housing 12 rotatably within a certain angular range to adjust relative movement of the housing 12 and the suction member 22. According to the present invention as described above, there are advantages in that the cradle for an automobile can be mounted easily to a desired location according to a demand of a user and a desired viewing angle can be conveniently obtained by rotating the device mounted to the cradle.

## Description

The present invention relates to a cradle, and more particularly, to a suction plate for mounting all kinds of devices operated by a driver and used in an interior of an automobile and, a cradle for an automobile having the suction plate.

In recent, a navigator providing a driver with overall information regarding traffic conditions through global positioning system satellites, or a terrestrial digital multimedia broadcasting terminal, a satellite digital multimedia broadcasting terminal or the like through which users can watch a broadcasting program in driving has come into wide use. Accordingly, the recent tendency is to equip the automobile with a device for an automobile, which provides various conveniences in driving an automobile, to utilize the device.

As the aforementioned devices for an automobile have come into wide use, the development for a cradle used for mounting the device in the automobile has been accelerated. As several examples of the cradle for an automobile which have been sold in the markets, there is a cradle having an adhesive at its portion to be mounted. That is, a lower surface of a supporting plate which serves to support the cradle for an automobile on a surface on which the cradle is mounted is attached thereto with a tape or the like.

In addition, there is a cradle for an automobile having a multi-articulated body which supports the cradle. In the above structure, the body is generally configured to have two portions as articulated joints, so that the cradle can be rotated at one portion in the fore-and-aft direction and at the other portion in the left-and-right directions. Accordingly, a user rotates the cradle in the fore-and-aft and left-and-right directions to ensure a desired viewing angle.

However, the prior art as described above has disadvantages as follows.

First, if the supporting plate serving to support the cradle for an automobile on the surface on which the cradle is mounted is configured to be an adhesion type, there is a problem in that it is difficult to move the cradle which has been initially mounted to an interior of an automobile to another place in order to remount the cradle. In addition, in a case where the cradle is remounted from a place to a place, an adhesion of the supporting plate is lowered, so that the cradle for an automobile cannot be securely fastened.

In addition, when the body for supporting the cradle is configured to have the two portions as articulated joints, a user can utilize a device for an automobile with a desired viewing angle by adjusting the two portions well. However, it is inconvenient to ensure a desired viewing angle by adjusting the two portions of the body individually.

The present invention is conceived to solve the aforementioned problems in the prior art. An object of the present invention is to provide a suction plate allowing a cradle for an automobile to be easily mounted and dismounted, and a cradle for an automobile having the suction plate.

An advantage of the present invention is to provide a cradle for an automobile allowing a viewing angle of a device mounted to the cradle to be conveniently adjusted.

According to an aspect of the present invention for achieving the objects, there is provided a suction plate, which comprises: a housing provided with a boss protruding in one direction, the boss having a through hole formed to pass through a side thereof; a suction member installed at a lower portion of the housing to be moved relative to the housing, the suction member having a central shaft inserted in the boss, the central shaft having a central hole formed thereon to pass through a side thereof; an elastic member provided in an upper portion of the central shaft to provide elastic force in a direction in which the suction member and the housing go away from each other; and an operating lever provided in the housing rotatably within a certain angular range to adjust relative movement of the housing and the suction member.

The suction plate may further comprise a fixing pin installed to pass through the through hole and the central hole in a state where the central shaft is inserted in the boss.

The through hole may be an elongated hole having a length corresponding to a vertical movement path of the fixing pin and the central hole has a size corresponding to a diameter of the fixing pin.

The operation lever may comprise an insertion ring which is fitted around the boss and rotatable within a predetermined angular range and has a cam protrusion formed thereon to guide a vertical movement of the fixing pin; and a handle extending from one side of the insertion ring and manipulated by a user.

The cam protrusion may comprise an inclined surface for directly guiding the fixing pin when the fixing pin is vertically moved; an upper seating surface on which the fixing pin is placed in a state where the fixing pin has been moved up along the inclined surface; and a lower seating surface on which the fixing pin is placed in a state where the fixing pin has been moved down along the inclined surface.

The insertion ring may be formed with stoppers for preventing the fixing pin placed on the upper or lower seating surface from being separated therefrom.

The elastic member may be fitted around a spring boss extending upward from an upper end of the central shaft.

The suction member may have a release handle provided at one side portion thereof to easily detach the suction member in a suction release state of the suction member.

A catching protrusion may be formed to protrude on the boss to prevent the insertion ring from being separated, the insertion ring having a recess concavely formed thereon corresponding to the catching protrusion.

According to another aspect of the present invention, there is provided a suction plate, which comprises: a housing having a through hole formed at a center portion thereof to be bored vertically; a suction member installed at a lower portion of the housing to be moved relative to the housing, the suction member having an elevating shaft protruding to pass through the through hole; an elastic member provided in an upper portion of the elevating shaft to provide elastic force in a direction in which the suction member and the housing go away from each other; and an operating lever provided in the housing rotatably within a certain angular range to adjust relative movement of the housing and the suction member as the elevating shaft is lifted in cooperation with the rotation of the operating lever.

The housing may further comprise a stopper for restricting a rotation range of the operating lever.

The elevating shaft may have an elevating cam formed slantingly on an outer peripheral surface thereof to guide the vertical movement of the elevating shaft.

The operation lever may comprise an insertion ring which is fitted around the elevating shaft and rotatable within a predetermined angular range and has a guide protrusion formed on an inner peripheral surface thereof, the guide protrusion corresponding to the elevating shaft and; and a handle extending from one side of the insertion ring and manipulated by a user.

The elastic member may be fitted around a supporting protrusion extending upward from an upper end of the elevating shaft.

The suction member may have a release handle provided at one side portion thereof to easily detach the suction member in a suction release state of the suction member.

According to a further aspect of the present invention, there is provided a cradle for an automobile, which comprises: the suction plate according to any one of claims 1 to 15 ; a support body having a lower end coupled with a coupling surface formed on an upper surface of the suction plate and an upper end provided with a head portion; a mounting plate having a coupling portion formed to protrude on one surface thereof, the coupling portion being pivotably coupled with the head portion; and a holder coupled with the coupling portion so that the holder tightens an outer peripheral surface of the coupling portion in a state where the head portion is coupled with the coupling portion.

The holder may have a compression inclined surface is formed on one side of an inner peripheral surface of the holder, the compression inclined surface being coupled with the coupling portion to tighten a leading end of the coupling portion.

A mounting protrusion may be formed to protrude on one surface of the mounting plate so that a device for an automobile is mounted to the mounting protrusion.

According to a still further aspect of the present invention, there is provided a cradle for an automobile, which comprises: the suction plate according to any one of claims 1 to 15 ; a support body having a lower end coupled with a coupling surface formed on an upper surface of the suction plate and an upper end provided with a head portion connected through a neck portion; a mounting plate having a coupling portion formed to protrude on one surface thereof, the coupling portion being pivotably coupled with the head portion provided at the upper end of the support body; a washer fitted around the neck portion and caught to a leading end of the coupling portion to support the head portion; and a fixed socket coupled with an inner side of the coupling portion to fix the head portion in a state where the head portion is coupled with the coupling portion.

The washer may have a diameter relatively smaller than the head portion and have an opening formed at one side so that the washer is fitted around the neck portion.

The coupling portion may have coupling wings formed thereon, the fixed socket may be provided with coupling bosses at both sides thereof, and the coupling wing and the coupling boss may have coupling holes formed thereon, respectively, thereby being coupled with each other by a screw through the coupling holes.

The coupling portion may have coupling wings formed thereon, the fixed socket may be provided with coupling bosses at both sides thereof, and the coupling wing and the coupling boss may have coupling holes formed thereon, respectively, thereby being coupled with each other by an adjusting screw which is tightened and loosened directly by a user.

According to the present invention as described above, there are advantages in that the cradle for an automobile can be mounted easily to a desired location according to a demand of a user and a desired viewing angle can be conveniently obtained by rotating the device mounted to the cradle.

Several preferred embodiments of the present invention will be described in more detail below with reference to accompanying drawings, from which the characteristics and advantages of the present invention will become more apparent.

The above and other objects, features and advantages of the present invention will be more apparent after reading the following detailed description taken in conjunction with the accompanying drawings, in which:
Fig. 1 is a perspective view of a first embodiment of a cradle for an automobile according to the present invention;
Fig. 2 is a partial sectional view showing a state where the first embodiment of the cradle for an automobile according to the present invention is assembled;
Fig. 3 is an exploded perspective view of a first embodiment of a suction plate according to the present invention;
Figs. 4a and 4b are views showing that the suction plate shown in Fig. 3 is fixed by suction;
Figs. 5a and 5b are views showing that a second embodiment of a suction plate according to the present invention is fastened by suction;
Fig. 6 is a perspective view of a second embodiment of the cradle for an automobile according to the present invention;

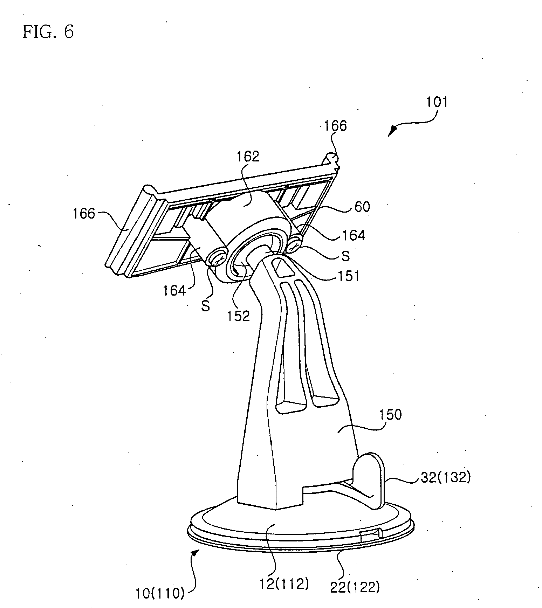

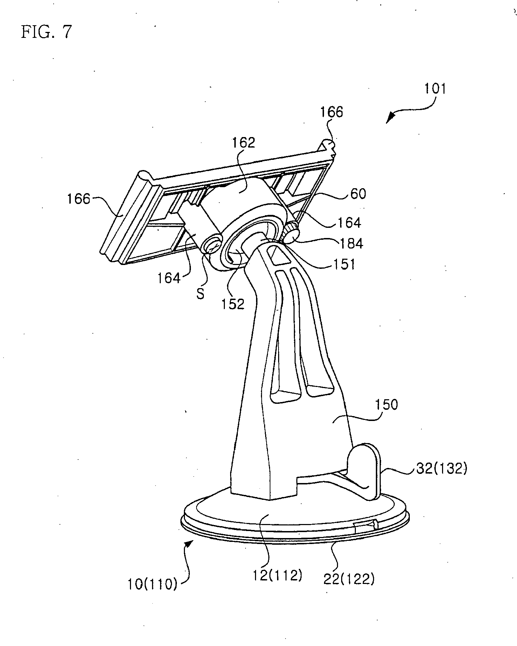

Fig. 6 is a perspective view of a third embodiment of the cradle for an automobile according to the present invention;

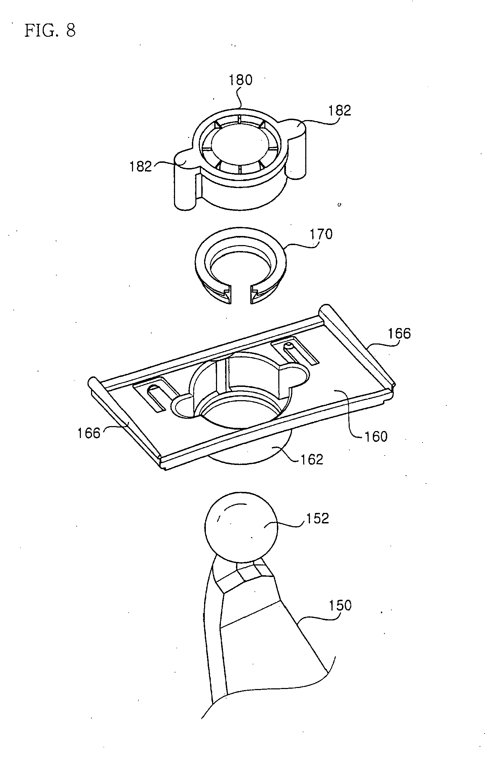

Fig. 8 is an exploded perspective view of an upper portion of to the second and third embodiments of the cradle of an automobile according the present invention; and

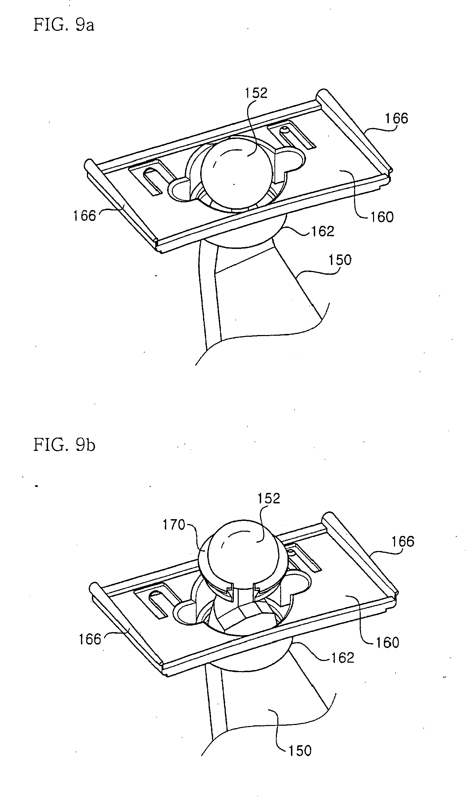

Figs. 9a to 9c are views showing a process of assembling the upper portion of the second and third embodiments of the cradle of an automobile according to the present invention.

Hereinafter, a preferred embodiment of the present invention will be described in more detail with reference to the accompanying drawings. In the following description and drawings, the same reference numerals are used to designate the same or similar components.

A first embodiment of a cradle for an automobile according to the present invention will be described in detail with reference to the accompanying drawings.

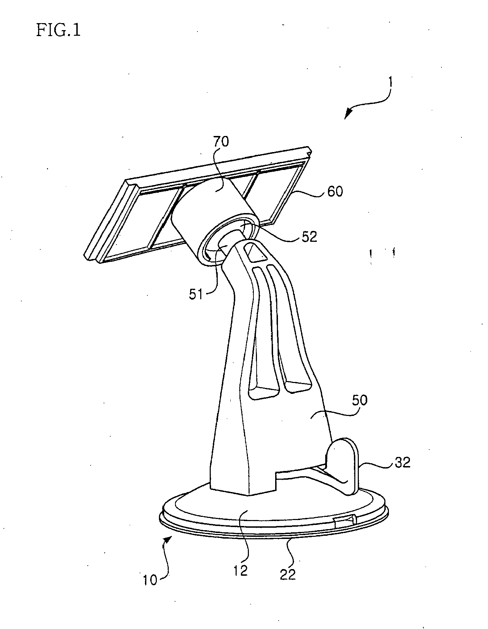

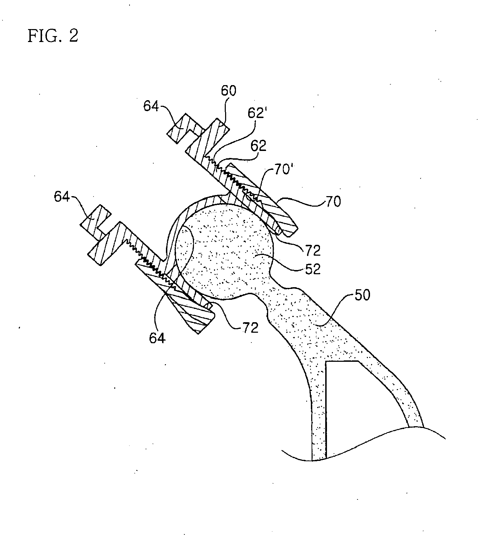

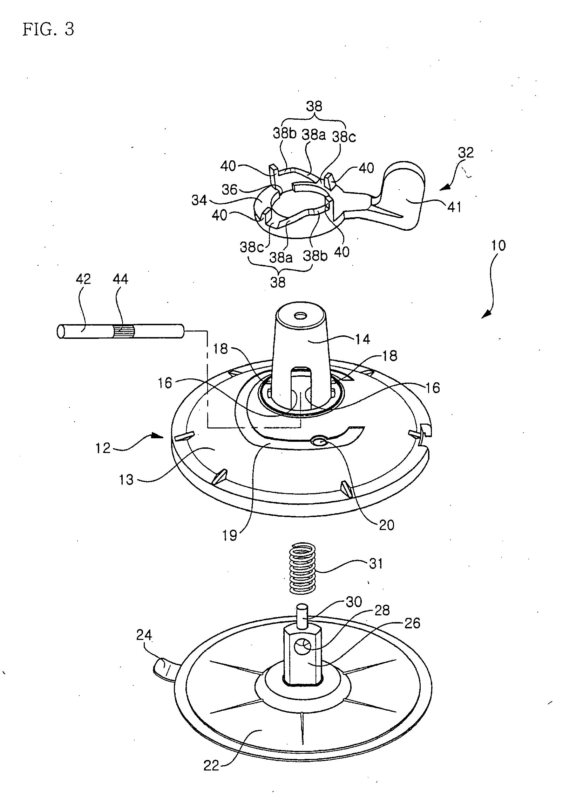

Fig. 1 is a perspective view of the first embodiment of a cradle for an automobile according to the present invention, Fig. 2 is a partial sectional view showing a state where the first embodiment of the cradle for an automobile according to the present invention is assembled, and Fig. 3 is an exploded perspective view of a first embodiment of a suction plate according to the present invention;

As shown the figures, a cradle 1 for an automobile comprises a suction plate 10 for fastening and supporting the cradle 1 to a surface on which the cradle is to be mounted; a support body 50 connected to an upper portion of the suction plate 10 to form an entire framework of the cradle; a mounting plate 60 connected to an upper end of the support body 50 for supporting various devices for an automobile thereon; and a holder 70 coupled to the mounting plate 60. Hereinafter, a configuration of the suction plate 10 will be described in detail.

The suction plate 10 is provided with a housing 12 defining an entire external appearance of the suction plate 10. The housing includes a housing body 13 having a dish-shape formed by depressing a generally circular plate member to be concave. A suction member 22, which will be described later, is vertically moved relative to the housing body 13 in the concave portion thereof.

A boss 14 is provided to protrude upward on an upper surface of the housing body 13. The boss 14 has an inner space defined therein for receiving a central shaft 26, which will be described later. In addition, an operating lever 32 to be described below is inserted and rotated in the boss 14. Meanwhile, through holes 16 are formed on the boss 14 to pass through a side thereof. The through holes 16 in which a fixing pin 42 to be described later is inserted are formed in a pair to be coaxially disposed. The fixing pin 42 is vertically moved in the through hole 16, so that the through hole 16 should have a length corresponding to a movement path of the fixing pin 42.

Catching protrusions 18 are formed on an outer surface of the boss 14. The protrusions 18 are formed in a pair to be symmetric. The catching protrusions 18 to which the operating lever 32 is caught enable the operating lever 32 to rotate without escaping upward in a state where the operating lever is inserted in the boss 14.

A coupling surface 19 on which a support body 50 to be described later is placed is concavely formed on the upper surface of the housing body 13. The coupling surface 19 corresponds to a lower surface of the support body 50. In addition, a pair of coupling openings 20 are formed on a side of the coupling surface 19. The coupling openings 20 allow screws or the like to be fastened in a state where the support body 50 is coupled to the coupling surface 19.

The suction member 22 is installed at a lower portion of the housing 12 to be vertically movable relative to the housing 12. The suction member 22 is not connected directly to the housing 12, but connected thereto through the fixing pin 42 to be described below so that the suction member is moved relative to the housing 12. The suction member 22 is a portion substantially fixed by suction to a shelf or surface on which the cradle is to be mounted. The suction member 22 is made of a synthetic resin, rubber, flexible material or the like so as to fasten the cradle 1 to the surface on which the cradle is to be mounted using suction force. That is, in a state where the suction member 22 is placed on the surface, if the operating lever 32 is manipulated, a portion of the suction plate 22 except its edge is pulled upward, so that the cradle 1 is fixed by suction force.

In addition, a release handle 24 is provided at one side of the edge of the suction member 22. The release handle 24 is provided for allowing a side of the suction member 22 in a suction release state of the suction member 22 to be lifted to thereby remove the remaining suction force, so that the suction member 22 is completely detached from the surface.

The central shaft 26 is formed to protrude on an upper surface of the suction member 22. The central shaft 26 is vertically moved while being inserted in the boss 14. A central hole 28 is formed on the central shaft 26 to pass therethrough in one direction. The fixing pin 42 is inserted in the central hole 28 in a state where the fixing pin is disposed coaxially with the through holes 16. Unlike the through hole 16, the central hole 28 has a diameter which is the same as the fixing pin 42.

In addition, a spring boss 30 around which an elastic member 31 is fitted is formed at an upper end of the central shaft 26. The elastic member 31 provides elastic force in a direction in which the suction member 22 and the housing 12 go away from each other.

Meanwhile, the operating lever 32 is fitted around the boss 14 to adjust the relative movement of the suction member 22 and the housing 12. The operating lever 32 is installed so that the operating lever can be rotated within a certain angular range in a state where the suction plate 10 is assembled. Accordingly, if a user rotates the operating lever 32, the suction member 22 is moved relative to the housing 12, so that the suction member 22 is fixed by suction to the surface on which the cradle is to be mounted or released therefrom.

The operating lever 32 is provided with an insertion ring 34 into which the boss 14 is inserted. The insertion ring 34 has a general ring shape for enabling the insertion ring to be fitted around the boss 14. In addition, recesses 36 are symmetrically formed on an inner peripheral surface of the insertion ring 34. The recesses 36 are formed to receive the catching protrusions 18 therein. When the operating lever is rotated in a state where the insertion ring 34 is fitted, the inner peripheral surface except the recesses 36 is caught to the catching protrusions 18 to prevent the operating lever 34 from being separated from the boss 14.

A pair of cam protrusions 38 are formed along an upper surface of the insertion ring 34. The cam protrusions 38 guide the fixing pin 42 to be described later so that it is vertically moved. Each cam protrusion 38 is formed with an inclined surface 38a, which directly guides the vertical movement of the fixing pin 42. In addition, an upper seating surface 38b is formed adjacent to an upper portion of the inclined surface 38a. On the contrary, a lower seating surface 38c is formed adjacent to a lower portion of the inclined surface 38a. The upper seating surface 38b and the lower seating surface 38c are portions on which the fixing pin 42 is placed when the fixing pin has been vertically moved, respectively.

Further, stoppers 40 are formed adjacent to the upper seating surface 38b and the lower seating surface 38c to prevent the fixing pin 42 having been vertically moved from escaping therefrom, respectively. In the meantime, a handle 41 is formed to extend from one side of the insertion ring 34. The handle 41 is gripped directly by a user when the user manipulates the operating lever 32.

In a state where the through holes 16 and the central hole 28 are disposed coaxially, the fixing pin 42 is inserted into the through holes and the central hole to pass therethrough. The fixing pin 42 has a general rod shape and serves to allow the suction member 22 to be relatively moved vertically. A knurl 44 is formed on a central portion of the fixing pin 42 to increase friction force between the central hole 28 and the fixing pin 42, thereby fixing the fixing pin 42 to the central hole 28.

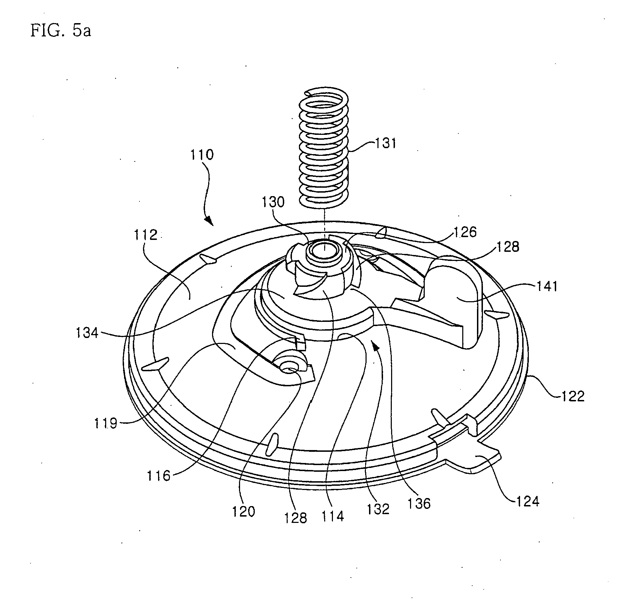

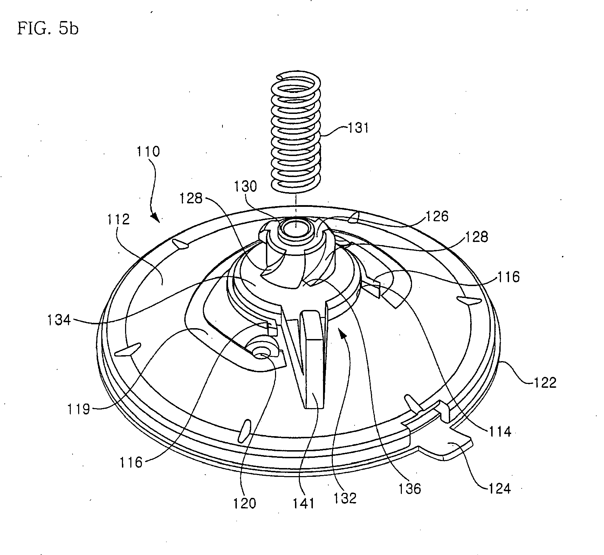

In the meantime, the structure of a second embodiment of the suction plate will be described below with reference to Figs. 5a and 5b.

A suction plate 110 is provided with a housing 112 defining an entire external appearance of the suction plate 110. The housing 112 has a dish-shape formed by depressing a general circular plate member to be concave. A suction member 122, which will be described later, is vertically moved relative to the housing 112 in the concave portion thereof.

A through hole 114 is formed in a central portion of the housing 112 so that an elevating shaft 126 to be described later passes through the through hole. In addition, a stopper 116 is formed around the through hole 114. The stopper 116 restricts a rotational range of an operating lever 132, which will be described later. In addition, the stopper 116 enables the operating lever 132 to maintain a suction state or a suction release state of the suction member 122 to be described later.

A coupling surface 119 on which a support body 50 to be described later is placed is concavely formed on an upper surface of the housing 112. The coupling surface 119 corresponds to a lower surface of the support body 50. In addition, a pair of coupling openings 120 are formed on a side of the coupling surface 119. The coupling openings 120 allow screws or the like to be fastened in a state where the support body 50 is coupled to the coupling surface 119.

In the meantime, the suction member 122 is installed at a lower portion of the housing 112 to be vertically moved relative to the housing 112. The suction member 122 is a portion substantially fixed by suction to a shelf or surface on which the cradle is to be mounted. The suction member 122 is made of a synthetic resin, rubber, flexible material or the like so as to fasten the cradle 1 to the surface on which the cradle is to be mounted using suction force. That is, in a state where the suction member 122 is placed on the surface, if the operating lever 132 to be described later is manipulated, a portion of the suction plate 122 except its edge is pulled upward, so that the cradle 1 is fixed by suction force.

In addition, a release handle 124 is provided at one side of the edge of the suction member 122. The release handle 124 is provided for allowing a side of the suction member 122 in a suction release state of the suction member 122 to be lifted to thereby remove the remaining suction force, so that the suction member 122 is completely detached from the surface.

The elevating shaft 126 is formed to protrude upward on an upper surface of the suction member 122. The elevating shaft 126 is to enable the suction member 122 to substantially move.

Elevating cams 128 are formed to protrude on an outer peripheral surface of the elevating shaft 126. The elevating cams 128 serve to substantially guide the elevation of the elevating shaft 126. The elevating cams 128 are formed in a shape similar to teeth of a helical gear so as to surround slantingly an outer circumference of the elevating shaft 126.

In addition, a supporting protrusion 130 is formed to protrude on an upper surface of the elevating shaft 126. An elastic member 131 is fitted around the supporting protrusion 130. The elastic member 31 provides elastic force in a direction in which the suction member 122 and the housing 112 go away from each other. In a state where the cradle 1 is mounted, an upper end of the elastic member is supported in the support body 50 to provide elastic force.

Meanwhile, the operating lever 132 is installed around the elevating shaft 126 to adjust the relative movement of the suction member 122 and the housing 112. The operating lever 132 is installed so that the operating lever can be rotated within a certain angular range in a state where the suction plate 10 is assembled. Accordingly, if a user rotates the operating lever 132, the suction member 122 is moved relative to the housing 112, so that the suction member 122 is fixed by suction to the surface on which the cradle is to be mounted or released therefrom.

The operating lever 132 is provided with an insertion ring 134 inserted in the elevating shaft 126. Guide protrusions 136 are formed on an inner surface of the inserting ring 134. The guide protrusion 136 has a shape corresponding to the elevating cam 128 so that the elevating cams 128 can be guided along the guide protrusions 136 when the operating lever 132 is rotated.

In addition, a handle 141 is formed to extend from one side of the insertion ring 134. The handle 141 is gripped directly by a user when the user manipulates the operating lever 132.

Next, the support body 50 forming a framework of the cradle 1 is coupled to the suction plate 10. Specifically, the support body 50 is coupled in a state where it is placed on the coupling surface 19. The support body 50 has a general column shape bent at a certain angle and supports the mounting plate 60. A lower end of the support body 50 is opened to enable the support body to be coupled to the suction plate 10 and is coupled to the coupling holes 20. In addition, a spherical head portion 52 is provided at the upper end of the support body 50. The support body 50 and the head portion 52 are connected to each other through a neck portion 51 having a diameter relatively smaller than that of the head portion 52.

In addition, the head portion 52 of the support body 50 is pivotably coupled with the mounting plate 60. The mounting plate 60 is a portion to which a device for an automobile, such as a navigator, a digital multimedia broadcasting device or the like, is mounted. A coupling portion 62 to which the head portion 52 is coupled is formed to protrude on one surface of the mounting plate 60. A concave seating surface 64 is formed on the coupling portion 62 so that the seating surface can be rotated at various angles in a state where the seating surface is in contact with an outer peripheral surface of the head portion 52. In addition, a thread 62' is formed an outer peripheral surface of the coupling portion 62 so that the thread 62' can be threadedly coupled with a holder 70, which will be described later. The coupling portion 62 is made of a material which can be elastically deformed inward by the holder 70 when the coupling portion is threadly coupled with the holder.

Meanwhile, mounting protrusions 64 for mounting a navigator, a digital multimedia broadcasting device or the like are provided on the surface of the mounting plate 60 opposite to the surface on which the coupling portion 62 is formed. In this embodiment, four mounting protrusions 64 are formed on the mounting plate 60.

In a state the head portion 52 is coupled to the coupling portion 62, the holder 70 is threadedly coupled with the coupling portion. To this end, a thread 70' corresponding to the thread 62' is also formed on an inner peripheral surface of the holder 70. A compression inclined surface 72 is slantingly formed on an inner peripheral surface of a leading end of the holder 70, i.e., a portion of the holder 70 opposite to the mounting plate 60. When the holder 70 is threadedly coupled with the coupling portion 62, the compression inclined surface 72 compresses an outer surface of the coupling portion 62 to securely fix the head portion 52. At this time, as described above, the coupling portion 62 is elastically deformed inward.

Here, the coupling portion 62 and the holder 70 should be designed to satisfy the following strength conditions. First of all, the holder 70 should tighten the coupling portion 62 to the extent that the mounting plate 60 is rotated at a desired angle when a user applied force thereto in a state where the cradle 1 is assembled. In addition, the holder 70 should tighten the coupling portion 62 to the extent that the mounting plate 60 and the navigator or the like mounted thereto are supported if no external force is exerted after the mounting plate 60 is rotated at a desired angle by the user.

Hereinafter, an assembling process and the operation of the first embodiment of the suction plate so configured according to the present invention will be described in detail.

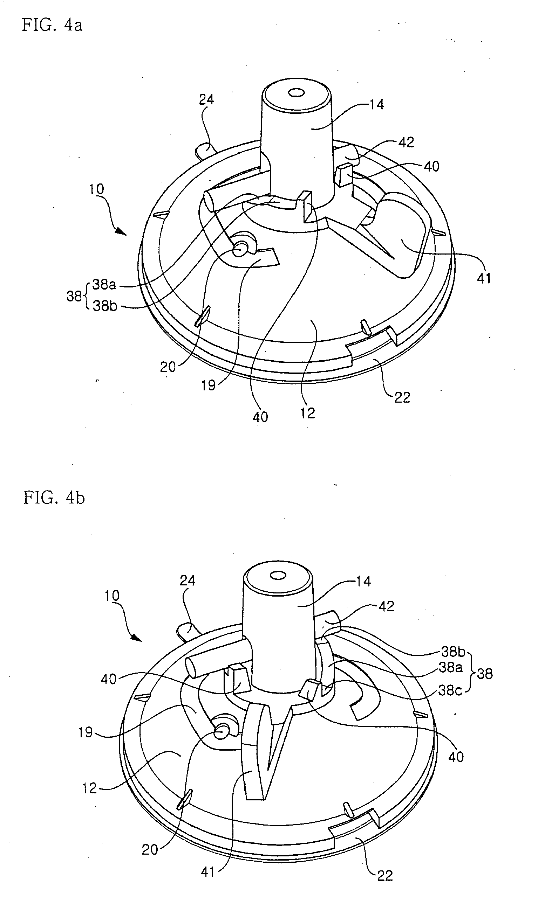

First, referring to Figs. 4a and 4b, a user fits the elastic member 31 around the spring boss 30 in a state where the suction member 22 is placed on the surface on which the cradle is to be mounted. In this state, the housing 12 is installed such that the suction member 22 is covered with the housing 12. In addition, the boss 14 is inserted into the insertion ring 34 of the operating lever 32.

Then, the fixing pin 42 is inserted into the through holes 16 and the central hole 28 to pass therethrough. At this time, the fixing pin 42 should be inserted to be placed on the lower seating surfaces 38c. The fixing pin 42 is inserted until the knurl 44 is caught to the central hole 28 by friction. As described above, a state where the suction plate 10 is assembled is a suction release state of the suction plate 10, which is shown in Fig. 3a.

When a user rotates the handle 41 clockwise in Fig. 3a in the suction release state of the suction plate 10, the fixing pin 42 is moved up along the inclined surfaces 38a in cooperation with the rotation of the operation lever 32 and then placed on the upper seating surface 38b. Simultaneously, the suction member 22 overcomes the elastic force of the elastic member 31 to thereby be pulled upward. The entire suction member 22 is not moved up, but the central portion of the suction member 22 except its edge is pulled upward and then fixed to the surface on which the cradle is to be mounted by suction. The above state is a suction state of the suction plate 10, which is shown in Fig. 3b.

For the purpose of releasing the suction state from the suction state of the suction plate 10 in order to remount the cradle 1, the handle 41 should be rotated in the reverse direction, i.e., counterclockwise in the Fig. 3b. Then, the fixing pin 42 is lowered along the inclined surfaces 38a in cooperation with the rotation of the operating lever 32. If the fixing pin 42 is placed on the lower seating surfaces 38c, the suction state of the suction plate 10 is released. In the suction release state of the suction plate 10, the user can lift the release handle 24 to completely detach the suction plate 10 from the surface on which the cradle is mounted.

Next, a process of coupling the support body 50 with the mounting plate 60 will be described with reference to Fig. 4.

First, a user makes the holder 70 pass the head portion 52. In addition, the head portion 52 is placed on the seating surface 64 of the coupling portion 60. In this state, the head portion 52 is not fixed by the coupling portion 60, but can be freely moved.

Here, the holder 70 passing the head portion 52 is threadedly coupled to the coupling portion 60. The holder 70 is threadedly coupled with the coupling portion 60 through the threads 62' and 70' thereby being tightened thereto. In a process of tightening the holder 70, the compression inclined surface 72 compresses the outer surface of the coupling portion 60. Accordingly, a leading end of the coupling portion 60 is elastically deformed inward of the coupling portion 60 to tighten the head portion 52. In this figure, the holder 70 can be more tightened by the user.

As described above, if the holder 70 is coupled, the head portion 52 is pivotably coupled with the mounting plate 60. Here, the head portion 52 is tightened by the holder 70 and the coupling portion 62 as described above to the extent that the head portion 52 is pivotable by applying user's certain force thereto and can be maintained in a stationary state so long as external force higher than a certain level is not applied thereto in a state where the head portion is fixed after pivoting.

Next, a process of fixing the second embodiment of the suction plate according to the present invention will be described with reference to Figs. 5a and 5b.

First of all, in the suction release state of the suction plate 110 shown in Fig. 5a, one end of the operating lever 132 is caught to the stopper 116, so that the operating lever is not rotated any more counterclockwise in the figure. In this state, if a user grips the handle 141 and then rotates the operating lever 132 clockwise, the elevating shaft 126 is lifted in cooperation with the rotation of the operating lever 132. The lift of the elevating shaft 126 is achieved through the elevating cams 128 guided by the guide protrusions 136. At this time, the elevating shaft 126 overcomes the elastic force of the elastic member 131 and is lifted. Simultaneously, the suction member 122 is pulled upward. Except the edge thereof, the central portion of the suction member 122 is pulled upward and the suction member is fixed to the surface on which the cradle is to be mounted. The above state is the suction state of the suction plate 11, which is well shown in Fig. 5b.

In order to release the suction state of the suction plate 110, the user grips the handle 141 and rotates the operating lever 132 counterclockwise. Then, the elevating shaft 126 is lowered in cooperation with the rotation of the operating lever 132. Simultaneously, the central portion of the suction member 122 is lowered. Once the operating lever 132 is lowered and caught to one side of the stopper 116, the suction state of the suction plate 110 is released. In addition, the user can lift up the release handle 124, thereby completely detaching the suction plate 110 from the surface on which the cradle is mounted.

Hereinafter, second and third embodiments of the cradle according to the present invention will be described in detail with reference to the accompanying drawings.

Fig. 6 is a perspective view of the second embodiment of the cradle for an automobile according to the present invention, Fig. 6 is a perspective view of the third embodiment of the cradle for an automobile according to the present invention, and Fig. 8 is an exploded perspective view of an upper portion of to the second and third embodiments of the cradle of an automobile according the present invention.

As shown in the figures, a cradle 101 for an automobile comprises the suction plate 10 or 110 for fixing and supporting the cradle 101 to a surface on which the cradle is to be mounted; a support body 150 connected to an upper portion of the suction plate 10 or 110 to form an entire framework of the cradle; and a mounting plate 160 provided at an upper end of the support body 150 to mount a device for an automobile thereto. Here, the structures of the suction plates 10 and 110 and the support body 150 are the same as the first embodiment of the present invention, so that the detail descriptions thereon will be omitted.

A coupling portion 162 to be coupled with the head portion 152 is formed to protrude on one surface of the mounting plate 160. The coupling portion 162 is formed in a generally hollow cylindrical shape, and coupling wings 164 are symmetrically formed on both sides of the coupling portion. A coupling hole (not shown) is formed on each coupling wing 164 so that a coupling boss 182 to be described later is inserted in the coupling hole and then coupled with the coupling wing by means of a screw S.

Here, an adjusting screw 184 may be coupled to the coupling boss 182. The adjusting screw 184 has a relatively large head portion for enabling a user to directly tighten and loosen the adjusting screw. One or both of the coupling bosses 182 may be coupled with the adjusting screw(s). In the meantime, supporting protrusions 166 for mounting the device for an automobile are provided at both ends of the mounting plate 160.

In addition, a washer 170 is fitted around a leading end of the coupling portion 162. Simultaneously, the washer 170 serves to prevent the head portion 152 from being separated in one direction in a state where the head portion 152 is coupled to the coupling portion162. Accordingly, the washer 170 has a step so as to be caught to the leading end of the coupling portion 162. In addition, the washer 170 has a diameter smaller than the head portion 152, but larger than a neck portion 151, and has one open side so that the washer is fitted around the neck portion 151.

In the meantime, a fixed socket 180 is coupled to the coupling portion 162 in a state where the head portion 152 and the washer 170 are coupled. Coupling bosses 182 corresponding to the coupling wings 164 are formed on both sides of the fixed socket 180. Each coupling boss 182 has a coupling hole 182' formed thereon and corresponding to a coupling hole (not shown) of the coupling wing 164.

Hereinafter, a process of assembling the second embodiment of the cradle according to the present invention having the structure as described above will be described. First, the process of assembling the suction plate 110 is the same as in the first embodiment, so that the descriptions thereon will be omitted. A process of assembling the support body 150 and the mounting plate 160 will be described with reference to Figs. 9a to 9c.

First of all, a user makes the head portion 152 pass through the coupling 162 through the leading end of the coupling portion (Fig. 9a). In this state, the washer 180 is fitted around the neck portion 151 (Fig. 9b). Since the washer 170 has the open side, the washer 170 can be easily fitted around the neck portion 151.

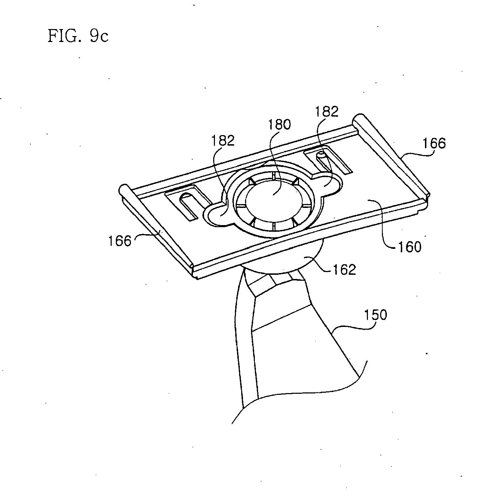

Then, the user pulls the support body 150 until the step of the washer 170 is caught to the leading end of the coupling portion 162, and then couples the fixed socket 180 to the coupling portion 162 (Fig. 9c). At this time, a portion of the washer opposite to the step supports the head portion 152. In addition, the fixed socket 180 is assembled by coupling the screw S or the adjusting screw 184 with the coupling hole (not shown).

As described above, once the support body 150 and the mounting plate 160 are coupled with each other, the mounting plate 160 can pivot on the support body 150. As in the first embodiment of the present invention, the coupling structure is designed so that the mounting plate 160 can pivot on the support body 150 within a desired angle range and the mounting plate 160 is tightened by the tightening force enough to maintain a state where the head portion is fixed after pivoting.

According to the cradle for an automobile of the present invention as described above, the following advantages can be expected.

First, in the present invention, a suction plate which can be mounted and detached selectively by a user is used as a portion of the cradle for an automobile supported on a surface on which the cradle is mounted. Accordingly, there is an advantage in that the cradle for an automobile can be easily mounted to and detached from an interior of an automobile by only operating the operating lever. As described above, the user can detachably mount the cradle for an automobile to a desired region in the automobile, if necessary.

In addition, according to the present invention, the mounting plate on which a device for an automobile is mounted can be pivotably coupled with the support body. Thus, there is an advantage in that a user can adjust conveniently a rotation angle of the mounting plate to secure various viewing angles.

Although several preferred embodiments of the present invention have been disclosed for illustrative purposes, it should be understood that numerous modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A suction plate, comprising:
a housing provided with a boss protruding in one direction, the boss having a through hole formed to pass through a side thereof;
a suction member installed at a lower portion of the housing to be moved relative to the housing, the suction member having a central shaft inserted in the boss, the central shaft having a central hole formed thereon to pass through a side thereof;
an elastic member provided in an upper portion of the central shaft to provide elastic force in a direction in which the suction member and the housing go away from each other; and
an operating lever provided in the housing rotatably within a certain angular range to adjust relative movement of the housing and the suction member.

2. The suction plate as claimed in claim 1, further comprising a fixing pin installed to pass through the through hole and the central hole in a state where the central shaft is inserted in the boss.

3. The suction plate as claimed in claim 1 or 2, wherein the through hole is an elongated hole having a length corresponding to a vertical movement path of the fixing pin and the central hole has a size corresponding to a diameter of the fixing pin.

4. The suction plate as claimed in any one of the preceding claims, wherein the operation lever comprises an insertion ring which is fitted around the boss and rotatable within a predetermined angular range and has a cam protrusion formed thereon to guide a vertical movement of the fixing pin; and a handle extending from one side of the insertion ring and manipulated by a user.

5. The suction plate as claimed in claim 4, wherein the cam protrusion comprises an inclined surface for directly guiding the fixing pin when the fixing pin is vertically moved; an upper seating surface on which the fixing pin is placed in a state where the fixing pin has been moved up along the inclined surface; and a lower seating surface on which the fixing pin is placed in a state where the fixing pin has been moved down along the inclined surface.

6. The suction plate as claimed in claim 4 or 5, wherein the insertion ring is formed with stoppers for preventing the fixing pin placed on the upper or lower seating surface from being separated therefrom.

7. The suction plate as claimed any one of the preceding claims, wherein the elastic member is fitted around a spring boss extending upward from an upper end of the central shaft.

8. The suction plate as claimed in any one of the preceding claims, wherein the suction member has a release handle provided at one side portion thereof to easily detach the suction member in a suction release state of the suction member.

9. The suction plate as claimed in claim 7 or 8, wherein a catching protrusion is formed to protrude on the boss to prevent the insertion ring from being separated, the insertion ring having a recess concavely formed thereon corresponding to the catching protrusion.

10. A suction plate, comprising:
a housing having a through hole formed at a center portion thereof to be bored vertically;
a suction member installed at a lower portion of the housing to be moved relative to the housing, the suction member having an elevating shaft protruding to pass through the through hole;
an elastic member provided in an upper portion of the elevating shaft to provide elastic force in a direction in which the suction member and the housing go away from each other; and
an operating lever provided in the housing rotatably within a certain angular range to adjust relative movement of the housing and the suction member as the elevating shaft is lifted in cooperation with the rotation of the operating lever.

11. The suction plate as claimed in claim 10, wherein the housing further comprises a stopper for restricting a rotation range of the operating lever.

12. The suction plate as claimed in claim 10 or 11, wherein the elevating shaft has an elevating cam formed slantingly on an outer peripheral surface thereof to guide the vertical movement of the elevating shaft.

13. The suction plate as claimed in any one of claims 10 to 12, wherein the operation lever comprises an insertion ring which is fitted around the elevating shaft and rotatable within a predetermined angular range and has a guide protrusion formed on an inner peripheral surface thereof, the guide protrusion corresponding to the elevating shaft and; and a handle extending from one side of the insertion ring and manipulated by a user.

14. The suction plate as claimed in any one of claims 10 to 13, wherein the elastic member is fitted around a supporting protrusion extending upward from an upper end of the elevating shaft.

15. The suction plate as claimed in any one of claims 10 to 14, wherein the suction member has a release handle provided at one side portion thereof to easily detach the suction member in a suction release state of the suction member.

16. A cradle for an automobile, comprising:
the suction plate according to any one of claims 1 to 15;
a support body having a lower end coupled with a coupling surface formed on an upper surface of the suction plate and an upper end provided with a head portion;
a mounting plate having a coupling portion formed to protrude on one surface thereof, the coupling portion being pivotably coupled with the head portion; and
a holder coupled with the coupling portion so that the holder tightens an outer peripheral surface of the coupling portion in a state where the head portion is coupled with the coupling portion.

17. The cradle as claimed in claim 16, wherein the holder has a compression inclined surface is formed on one side of an inner peripheral surface of the holder, the compression inclined surface being coupled with the coupling portion to tighten a leading end of the coupling portion.

18. The cradle as claimed in claim 16 or 17, wherein a mounting protrusion is formed to protrude on one surface of the mounting plate so that a device for an automobile is mounted to the mounting protrusion.

19. A cradle for an automobile, comprising:
the suction plate according to any one of claims 1 to 15;
a support body having a lower end coupled with a coupling surface formed on an upper surface of the suction plate and an upper end provided with a head portion connected through a neck portion;
a mounting plate having a coupling portion formed to protrude on one surface thereof, the coupling portion being pivotably coupled with the head portion provided at the upper end of the support body;
a washer fitted around the neck portion and caught to a leading end of the coupling portion to support the head portion; and
a fixed socket coupled with an inner side of the coupling portion to fix the head portion in a state where the head portion is coupled with the coupling portion.

20. The cradle as claimed in claim 19, wherein the washer has a diameter relatively smaller than the head portion and has an opening formed at one side so that the washer is fitted around the neck portion.

21. The cradle as claimed in claim 19 or 20, wherein the coupling portion has coupling wings formed thereon, the fixed socket is provided with coupling bosses at both sides thereof, and the coupling wing and the coupling boss have coupling holes formed thereon, respectively, thereby being coupled with each other by a screw through the coupling holes.

22. The cradle as claimed in claim 19 or 20, wherein the coupling portion has coupling wings formed thereon, the fixed socket is provided with coupling bosses at both sides thereof, and the coupling wing and the coupling boss have coupling holes formed thereon, respectively, thereby being coupled with each other by an adjusting screw which is tightened and loosened directly by a user.
